# EUROPEAN PATENT APPLICATION

(11) **EP 3 659 683 A1**
(43) Date of publication of application: **03.06.2020**
(21) Application number: 18838756.7
(22) Date of filing: 17.07.2018
(51) Int. Cl.: A63F 13/52

(54) **OBJECT DISPLAY METHOD AND DEVICE AND STORAGE MEDIUM**

(30) Priority: 27.07.2017 CN 201710627213
(71) Applicant: Tencent Technology (Shenzhen) Company Limited, Shenzhen, Guangdong 518057 (CN)
(72) Inventor: WANG, Yiran, Shenzhen, Guangdong 518057 (CN)
(74) Representative: Eisenführ Speiser
(86) International application number: PCT/CN2018/096001
(87) International publication number: WO 2019/019940

(57) **Abstract**

Disclosed are an object display method and device, and a storage medium, wherein the method comprises: obtaining first target movement information of a first member object participating in the current game through a client of a game application, wherein the first member object at least comprises at least one other object belonging to the same camp as a target object, the target object is an object used by the client of the game application in the current game, and the first target movement information at least comprises a moving direction of the first member object; and displaying the first target movement information of the first member object in the client of the game application. The present application solves the technical problem of an overly complicated display operation of object display methods used in the prior art.

## Description

The present disclosure claims priority to Chinese Patent Application No. 201710627213.0, entitled "METHOD, APPARATUS AND STORAGE MEDIUM FOR DISPLAYING OBJECT" filed on July 27, 2017, which is incorporated by reference in its entirety.

### FIELD OF THE TECHNOLOGY

The present disclosure relates to the field of computers, and specifically, to a method, an apparatus, and a storage medium for displaying an object.

### BACKGROUND OF THE DISCLOSURE

Nowadays, more and more users start to download multiplayer online battle arena games (MOBA games for short) applications by using terminals, and participate in the MOBA games with other players.

In an MOBA game application at present, member objects that participate in a game are usually in a moving state. Due to restriction of a terminal screen, a player usually needs to repeat operations, such as dragging and view switching, for multiple times to obtain a location of a team-member object. Only in such way, the player is able to observe a moving status of the team-member object, thereby obtain a future moving direction of the team-member object, and further determine an advancing strategy for the current ongoing game. That is, a problem in conventional game applications is that a display operation is excessively complex in a method for displaying objects.

Currently, there is no effective solution addressing the aforementioned issue.

### SUMMARY

A method, an apparatus, and a storage medium for displaying an object are provided according to embodiments of the present disclosure, so as to address at least a technical issue that a display operation is excessively complex in a method for displaying objects applied in conventional technology.

According to an aspect of embodiments of the present disclosure, a method for displaying an object is provided, including: obtaining, via a client of a game application, first target movement information of a first member object participating in a current game event, where the first member object includes at least one object other than a target object, the at least one object is in a same camp as the target object, the target object is an object used by the client of the game application in the current game event, and the first target movement information includes at least a moving direction of the first member object; and displaying, in the client of the game application, the first target movement information of the first member object.

According to another aspect of embodiments of the present disclosure, an apparatus for displaying an object is further provided, including: a first obtaining unit, configured to obtain, via a client of a game application, first target movement information of a first member object participating in a current game event, where the first member object includes at least one object other than a target object, the at least one object is in a same camp as the target object, and the target object is an object used by the client of the game application in the current game event; and a first display unit, configured to display, in the client of the game application, the first target movement information of the first member object.

According to another aspect of embodiments of the present disclosure, a storage medium is further provided, where the storage medium storing a program, the program when executed performs the aforementioned method for displaying an object.

According to another aspect of embodiments of the present disclosure, an electronic apparatus is further provided, where the electronic apparatus includes a memory, a processor, and a computer program stored on the memory and executable by the processor. The processor performs the aforementioned method for displaying an object by executing the computer program.

In embodiments of the present disclosure, the first target movement information of the first member object participating in the current game event is obtained via the client of the game application. The first member object includes the at least one object other than the target object, and the at least one object is in the same camp as the target object. The target object is the object used by the client of the game application in the current game event. The first target movement information includes at least the moving direction of the first member object. Further, the first target movement information of the first member object is displayed in the client of the game application. That is, the first target movement information including the moving direction of the first member object is directly displayed in the client of the game application, so as to fast obtain a next moving strategy of the first member object. There is no need to repeat operations such as dragging and view switching for multiple times. Thereby, simplified are operations of displaying the first target movement information of the first member object. Addressed is the technical issue that the display operation is excessively complex in the method for displaying an object applied in the conventional technology.

### BRIEF DESCRIPTION OF THE DRAWINGS

The accompanying drawings described herein are intended to provide further understanding of the present disclosure and constitute a part of the present disclosure. Exemplary embodiments of the present disclosure and the description thereof are used for explaining the present disclosure rather than being construed as improper limitations to the present disclosure. The accompanying drawings are as follows.
Figure 1 is a schematic diagram of an application scenario according to an embodiment of the present disclosure;
Figure 2 is a schematic diagram of a method for displaying an object according to an embodiment of the present disclosure;
Figure 3 is a schematic diagram of a game application interface according to an embodiment of the present disclosure;
Figure 4 is a schematic diagram of another game application interface according to an embodiment of the present disclosure;
Figure 5 is a first schematic diagram of another game application interface according to an embodiment of the present disclosure;
Figure 6 is a second schematic diagram of another game application interface according to an embodiment of the present disclosure;
Figure 7 is a schematic structural diagram of an apparatus for displaying an object according to an embodiment of the present disclosure; and
Figure 8 is a schematic structural diagram of an electronic apparatus according to an embodiment of the present disclosure.

### DESCRIPTION OF EMBODIMENTS

To make the technical solutions of the present application clearer, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "first" and "second" in this specification, the claims, and the foregoing accompanying drawings of the present disclosure are intended to distinguish between similar objects rather than describe a particular sequence or a chronological order. It is understood that the data termed in such a way are interchangeable in proper circumstances, so that the embodiments of the present disclosure described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

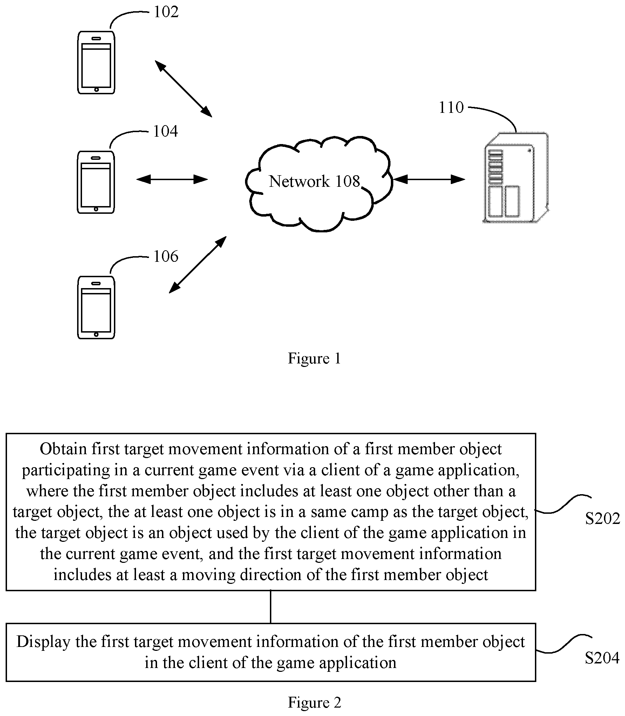

According to an embodiment of the present disclosure, a method for displaying an object is provided. As an optional implementation, the method for displaying an object may be applied to an application environment as shown in Figure 1, which is not limited thereto. The application environment includes a server 101 and multiple terminals. For example, the multiple terminals are a terminal 102, a terminal 104, and a terminal 106, respectively. Each of the terminal 102, the terminal 104, and the terminal 106 is installed with a client of a multiplayer online battle arena game (MOBA game for short) application. The terminal 102, the terminal 104, and the terminal 106 are connected to an application server 110 of the MOBA game application through a network 108. Each of the terminal 102, the terminal 104, and the terminal 106 obtains first target movement information of a first member object participating in a current game event via the installed client of the game application, and displays the first target movement information of the first member object in the client of the game application. The first member object includes at least one object other than a target object, and the at least one object is in a same camp as the target object. The target object is an object used by the client of the game application in the current game event. The first member object may further include the target object. The first target movement information includes at least a moving direction of the first member object.

The terminal 102, the terminal 104, or the terminal 106, when obtaining the first target movement information of the first member object via the client of the game application, may first obtain movement information of member objects participating in the current game event via the client of the game application. The member objects include a first member object and a second member object. The first member object and the second member object are opposing in the current game event. The first target movement information matching the first member object is obtained from the movement information.

In this embodiment, the foregoing terminal may include but is not limited to at least one of: a mobile phone, a tablet computer, a notebook computer, a desktop PC, a digital television, or other hardware devices capable to display an object in a game application. The foregoing network may include but is not limited to at least one of: a wide area network, a metropolitan area network, or a local area network. The foregoing is merely exemplary, and this embodiment is not limited thereto.

According to an embodiment of the present disclosure, a method for displaying an object is provided. As shown in Figure 2, the method includes steps S202 and S204.

In step S202, first target movement information of a first member object participating in a current game event is obtained via a client of a game application. The first member object includes at least one object other than a target object, and the at least one object is in a same camp as the target object. The target object is an object used by the client of the game application in the current game event. The first target movement information includes at least a moving direction of the first member object.

In step S204, the first target movement information of the first member object is displayed in the client of the game application.

In an embodiment, the game application may include but is not limited to a multiplayer online battle arena game (MOBA game for short) application, which is referred to as an MOBA game application hereinafter to facilitate description. The game application is configured to display a moving location and a moving direction of an ally in the same camp, thereby obtain a future moving direction of a member object in the same camp, and further determine an advancing strategy of the current ongoing game. An application for displaying a moving location and a moving direction of an object in a game application falls within the protection scope of embodiments of the present disclosure.

In this embodiment, the first target movement information including the moving direction of the first member object is directly displayed via the client of the game application, so as to fast obtain a future moving strategy of the first member object. There is no need to repeat operations such as dragging and view switching for multiple times. Thereby, simplified are operations of displaying the first target movement information of the first member object. Further, addressed is the technical issue that the display operation is excessively complex in the method for displaying an object applied in conventional technology.

In an embodiment, movement information of member objects participating in the current game event is obtained via the client of the game application, and the first target movement information matching the first member object is obtained from the movement information, as an implementation of obtaining the first target movement information of the first member object participating in the current game event via the client of the game application. The member objects include, but are not limited to, the first member object and a second member object. The first member object may include, but is not limited to, one or more member objects, and the second member object may include, but is not limited to, one or more member objects. There may be a relationship among member objects that are in the same camp (for example, belongs to the first member objects or the second member object), and the relationship may be but is not limited to cooperation of helping each other. There may be a relationship between member objects that are in different camps, and the relationship may be but is not limited to hostility of opposing each other. A quantity of the member objects may be set according to a scene of the game application, or determined based on game configuration information such as a game mode. A manner of determine the quantity is not limited thereto.

In an embodiment, a server of the game application issues the first target movement information via the game application to the terminal, and the terminal receives the first target movement information issued by the server via the client of the game application, as an implementation of obtaining the first target movement information of the first member object participating in the current game event via the client of the game application. The server of the game application does not issue the first target movement information of the first member object via the client of the game application, until detecting a change in movement information of the first member object.

In an embodiment, the first member object further includes the target object. Displaying the first target movement information of the first member object in the client of the game application includes but is not limited to following steps. The first target movement information of the target object is displayed in a first display mode. The first target movement information of another object in the first member objects is displayed in a second display mode. A display label in the first display mode is different from a display label in the second display mode.

For example, it is assumed that a client of an MOBA game application is installed on a current terminal, and a target object A is currently used in the client of the MOBA game application. After obtaining the movement information, the first target movement information of the target object may be in the first display mode, and the first target movement information of an object B that is also a first member object may be displayed in the second display mode. A manner of display is not limited thereto. The display labels of the two display modes are different. In one embodiment, the display labels are embodied as colors, and the first target movement information of different objects may be distinguished from each other by being displayed in different colors. For example, the first target movement information of the target object is displayed in green, and the first target movement information of the another object in the first member objects is displayed in blue for distinction. In another embodiment, the display labels are embodied as shapes, and different shapes may be used for distinction. For example, the first target movement information of the target object is configured within a pentagon, and the first target movement information of the another object is configured within a circle. The foregoing is merely examples, and the present disclosure is not limited thereto.

In an embodiment, obtaining the first target movement information matching the first member object from the movement information includes but is not limited to following steps. An object identifier of the first member object is obtained. The first target movement information matching the first member object is identified from the movement information according to the object identifier. In this embodiment, a camp to which objects used by different game accounts belong may be distinguished through the object identifiers. A distinguishing manner is not limited thereto.

In an embodiment, the first target movement information further includes a coordinate location of the first member object. Displaying the first target movement information of the first member object in the client of the game application includes, but is not limited to following steps. A map corresponding to the current game event is displayed in the client of the game application. A first avatar identifier of the first member object is displayed on the map according to the coordinate location of the first member object. A location of the first avatar identifier on the map corresponds to a location of the first member object in a game scene corresponding to the map. The first avatar identifier is provided with a first direction marker indicating the moving direction of the first member object.

In this embodiment, an interactive interface in the client of the game application may display the map corresponding to the current game event of the game application. The interactive interface is not limited thereto. The map may be always displayed, with a reduced scale, on the interactive interface in the client of the game application. The map may be invoked and displayed on the interactive interface after a trigger button is tapped. A display manner of the map is not limited thereto. The forgoing display manner is merely an example, and this embodiment is not limited thereto. In this embodiment, the avatar identifiers may be displayed on the map for the member objects. This embodiment is not limited thereto. A display area of the map is limited, and locations of the first member object and the second member object may be marked on the map as their respective corresponding avatar identifiers, according to their respective current coordinate locations. In addition, the avatar identifier may further be provided with a corresponding direction marker, according to a moving direction of the member object. This embodiment is not limited thereto. For example, a directional arrow or the like corresponding to the moving direction of the object may be added on the avatar identifier.

In this embodiment, the interactive interface includes an image of a game scene and an operation interface that are displayed to the user. The interactive interface includes the map and the like. The game scene is an image corresponding to the map, and configured to present corresponding map details, environment, and the like, to a user. Moreover, the map may be displayed at any location on the interactive interface. The map may be displayed at a corner of the interactive interface, so as to avoid hindering operations from the user. For example, the map is displayed at an upper left corner, an upper right corner, a lower left corner, or a lower right corner of the interactive interface.

In an embodiment, the method for displaying an object further includes following steps. Permission information configured for the target object in the current game event is obtained. Second target movement information matching at least one of the second member object is obtained, in a case that the permission information indicates that the target object has first permission. The second target movement information includes at least a moving direction of the second member object. The second target movement information of the second member object is displayed in the client of the game application.

The first permission is permission for obtaining movement information of an opposing member. Moreover, the permission information configured for the target object in the current game event may be obtained before, or after, the first target movement information of the first member object participating in the current game event is obtained via the client of the game application. In addition, when obtaining the second target movement information matching the at least one second member object, the movement information of the member objects participating in the current game event may be obtained via the client of the game application, and the second target movement information is obtained from the movement information. Or, the second target movement information may be directly received from the server via the client of the game application.

Here is one application scenario. For every account in a game, the first target movement information of the first member object may be displayed, and the second target movement information may be hidden or partially hidden, so as to ensure fairness of the game. The present disclosure is not limited thereto. In case of being provided with a specific ability, the target object may obtain a specific permission, by which the second target movement information of the second member object can be displayed for a short time, and thereby a change of winning is increased for a camp to which the target object belongs. For example, in case of obtaining the permission information that indicates the target object being provided with the first permission in the current game event, the second target movement information of an opposing second member object is displayed for a preset period for the client using the target object, besides the first target movement information of the first member object.

In an embodiment, the second target movement information further includes a coordinate location of the second member object. Displaying the second target movement information of the second member object in the client of the game application includes, but is not limited to, following steps. A map corresponding to the current game event is displayed in the client of the game application. A second avatar identifier of the second member object is displayed on the map according to the coordinate location of the second member object. A location of the second avatar identifier on the map corresponds to a location of the second member object in a game scene corresponding to the map. The second avatar identifier is provided with a second direction marker indicating the moving direction of the second member object. Duration of displaying the second direction marker in the current game event is shorter than a preset threshold.

In an embodiment, the method for displaying an object may include, but is not limited to, following steps before the first target movement information of the first member object is obtained via the client of the game application. Movement information of the target object is detected in the client of the game application. The movement information of the target object is reported to a server of the game application. Thereby, the server of the game application transmits the movement information to the first member object participating in the current game event. The server of the game application may transmit the movement information of the target object to the first member object participating in the current game event, or to both the first member object and the second member object.

According to embodiments of the present disclosure, the first target movement information including the moving direction of the first member object is directly displayed in the client of the game application, so as to fast obtain a future moving strategy of the first member object. There is no need to repeat operations such as dragging and view switching for multiple times. Thereby, simplified are operations of displaying the first target movement information of the first member object. Further, addressed is the technical issue that the display operation is excessively complex in a method for displaying an object applied in conventional technology.

In an embodiment, displaying the first target movement information of the first member object in the client of the game application includes, but is not limited to, following steps S1 and S2.

In step S1, in a case that the first member object further includes the target object, the first target movement information of the target object is displayed in a first display mode.

In step S2, the first target movement information of another object in the first member objects is displayed in a second display mode. A display label in the first display mode is different from a display label in the second display mode.

Here is a specific application scenario, and a game application is taken as an example. The first target movement information of the target object is displayed in the first display mode. In the first display mode, an avatar identifier of the target object may be displayed through a first display label, on a map displayed in an interactive interface of the game application. The first display mode is not limited thereto. As an example, a color of the first display label is set to be a first color. In addition, the first display label is further provided with the moving direction of the target object. The first target movement information of another object in the first member objects is displayed in the second display mode. In the second display mode, an avatar identifier of the another object may be displayed via a second display label, on the map displayed in an interactive interface of the game application. As an example, a color of the second display label is set to be a second color. In addition, the second display label is further provided with a moving direction of the another object. Thereby, the target object and another object are distinguished from each other.

In this embodiment, the first target movement information of the target object is displayed in the first display mode, and the first target movement information of the another object among the first member objects is displayed in the second display mode. Thereby, the target object and the another object on the map are distinguished, and moving locations and moving directions of different first member objects are directly and clearly recognized. Each member object in the first member objects is fast distinguished, improving display efficiency and facilitating advancing the game.

In an embodiment, obtaining the first target movement information matching the first member object from the movement information includes, but is not limited to, following steps S1 and S2.

In step S 1, an object identifier of the first member object is obtained.

The object identifier of the first member object is obtained. The object identifier is configured uniquely identify each member object in the game application. The object identifier may include, but is not limited to, a game account ID used in the game application, an identifier of a game virtual character, and other identifiers (such as a Play ID) used in the game application.

In step S2, the first target movement information matching the first member object from the movement information is identified according to the object identifier.

Here is a specific application scenario, and a game application is taken as an example for illustration. In a client of the game application of a mobile terminal, movement information of all member objects is received after being transmitted by a server of the game application. After the movement information is received, objects belonging to the first member object are distinguished and identified according to the object identifiers of the objects. Accordingly, the first target movement information of the first member object is displayed. The first target movement information includes at least the moving direction of the first member object. The first target movement information may further include a coordinate location of the first member object.

In this embodiment, the first target movement information matching the first member objects is identified from the movement information according to the object identifier. Hence, members of a group are distinguished, and the first target movement information of the first member object is quickly and directly displayed in an interactive interface of the client of the game application. Display operations are simplified, and display efficiency is improved. Further, a future moving strategy of another member object in the first member objects is determined according to the first target movement information, and a chance of winning against the second member object is increased.

In an embodiment, displaying the first target movement information of the first member object in the client of the game application includes, but is not limited to, following steps S1 and S2.

In step S1, a map corresponding to the current game event is displayed in the client of the game application.

In step S2, a first avatar identifier of the first member object is displayed on the map, according to the coordinate location of the first member object. A location of the first avatar identifier on the map corresponds to a location of the first member object in a game scene corresponding to the map. The first avatar identifier is provided with a first direction marker indicating the moving direction of the first member object.

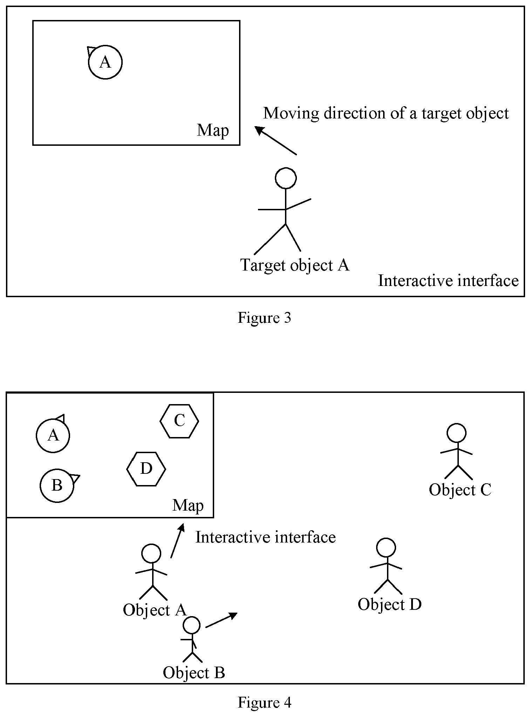

Here is a specific application scenario, and an MOBA game application installed on a mobile terminal is taken as an example for illustration. Figure 3 is a schematic diagram of an interactive interface of an MOBA game application. The interactive interface displays a map interface and an interactive interface for the current game event. To facilitate illustration, the map interface and the interactive interface are illustrated for the game application, while an operation panel of the game application is not illustrated. A small window at the upper left corner of the interactive interface is displayed as the map interface. The map interface is configured to display a map corresponding to the current game event, and display an avatar identifier of the first member object on the map according to coordinates at which a target object A is located. The target object A as shown in the map in Figure 3 is displayed as a circular identifier on the map. The circular identifier is provided with a first direction marker indicating a moving direction of the target object A. A location of the avatar identifier of the target object A on the map corresponds to a location of the target object A in a game scene corresponding to the map. In the game scene of the game application, the moving direction of the target object A (indicated by a pointing direction of an arrow to facilitate illustration, and there is no such arrow in the actual application scenario) is consistent with a moving direction of the avatar identifier of the target object A on the map.

In this embodiment, the map corresponding to the current game event is displayed in the client of the game application, and the first avatar identifier of the first member object is displayed on the map. Thereby, an advancing strategy of the member object in the current game event is fast determined by displaying the movement information of the member object on the map. Game experience of a user is improved.

In one embodiment, the method includes following steps S1 and S2.

In step S 1, permission information configured for the target object in the current game event is obtained. In a case that the permission information indicates the target object having first permission, second target movement information matching at least one of the second member object is obtained. The second target movement information includes at least a moving direction of the second member object.

The permission information configured for the target object in the current game event may be obtained after, or before, the first target movement information matching the first member object is obtained. In embodiments of the present disclosure, a sequence of obtaining the permission information configured for the target object in the current game event and obtaining the first target movement information matching the first member object is not limited.

When obtaining the second target movement information, movement information of member objects participating in the current game event may be obtained via the client of the game application, and the second target movement information matching at least one second member object may be obtained from the movement information. Or, the second target movement information matching at least one second member object may be directly received from the server via the client of the game application.

In step S2, the second target movement information of the second member object is displayed in the client of the game application.

The second target movement information of the second member object is displayed in the client of the game application, when the first target movement information of the first member object is displayed in the client of the game application,.

Here is a specific application scenario, and an MOBA game application installed on a mobile terminal is taken as an example for illustration. Figure 4 is a schematic diagram of an interactive interface of an MOBA game application. It is assumed that an object A and an object B are the first member objects, and an object C and an object D are the second member objects. The map may directly display avatar identifiers of the object A and the object B that belong to the first member objects, and such avatar identifiers are provided with direction markers. Only avatar identifiers for marking locations are displayed to show the object C and the object D, which belong to the second member objects. A display manner for the object C and the object D is not limited thereto. In the scenario as shown in Figure 4, the object A and the object B belonging to the first member objects are opposing member objects of the object C and the object D belonging to the second member objects. Hence, the moving directions corresponding to the object C and the object D are not displayed with the avatar identifiers on the map.

Further, it is assumed that the permission information configured for the target object A indicates the target object A having the first permission. In such case, the second target movement information matching at least one second member object is obtained from the movement information. For example, movement information of the object C is obtained. In an embodiment, a location of the avatar identifier of the object C and a moving direction of the object C are displayed on the map for the target object A.

The second target movement information of the second member object is displayed in the client of the game application. Identifiers of the object C and the object D in the second member objects are set to be pentagons on the map, as shown in Figure 4. A marker showing the moving direction is provided at one edge of the pentagon. The foregoing is merely an example, and this embodiment is not limited thereto.

In this embodiment, the permission information configured for the target object in the current game event is obtained. In a case that the permission information indicates the target object having a first permission, the second target movement information matching at least one second member object is obtained from the movement information. Thereby, besides the moving direction of the first member object, the moving location and the moving direction of the second member object may further be displayed for the target object within a preset period.

In an embodiment, displaying the second target movement information of the second member object in the client of the game application includes, but is not limited to, following steps S1 and S2.

In step S1, a map corresponding to the current game event is displayed in the client of the game application.

In step S2, a second avatar identifier of the second member object is displayed on the map, according to the coordinate location of the second member object. A location of the second avatar identifier on the map corresponds to a location of the second member object in a game scene corresponding to the map. The second avatar identifier is provided with a second direction marker indicating the moving direction of the second member object. Duration of displaying the second direction marker in the current game event is shorter than a preset threshold.

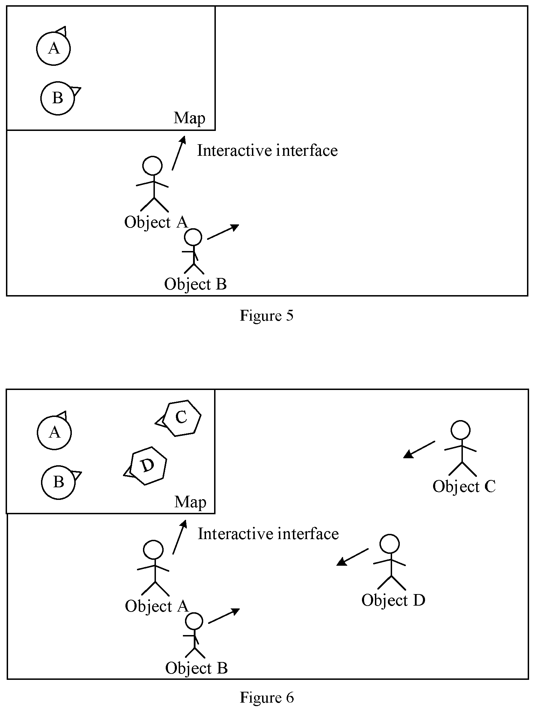

The MOBA game application installed on the mobile terminal is further taken as an example for illustration. Figure 5 is a schematic diagram of an interactive interface of the MOBA game application. An object A and an object B are the first member objects. Generally, second member objects are located outside a preset vision range of the first member objects, to which the object A and the object B belong. The second member objects include an object C and an object D. Being located outside the preset vision range of the object A and the object B, the object C and the object D are not displayed for the object A and the object B. Users corresponding to the object A and the object B cannot obtain locations and moving directions of the object C and the object D from the map of an application interface. As shown in Figure 6, the second target movement information matching at least one second member object is obtained from the movement information. For example, movement information of the object C and the object D is obtained in a case that the target object A triggers a preset condition (for example, a game character represented by the target object A activates a skill, or the object C and/or the object D moves into the vision range of the target object A). In one embodiment, locations of avatar identifiers and moving directions of the object C and the object D are displayed on the map for the target object A. The duration for displaying the second direction markers of the object C and the object D in the client of the target object A in the current game event is less than the preset threshold. For example, a location and a moving direction of an enemy object may be obtained and displayed in a client of the game application, after an object in the MOBA game application activates a corresponding skill.

In this embodiment, the map corresponding to the current game event is displayed in the client of the game application, and the second avatar identifier of the second member object is displayed on the map. Thereby, besides the moving direction of the first member object, the moving location and the moving direction of the second member object may further be displayed for the target object for a preset period. A chance of winning is increased, while display operations are simplified.

In an embodiment, the method for displaying an object further includes, but is not limited to, following steps S1 and S2 before the first target movement information of the first member object participating in the current game event is obtained via the client of the game application.

In step S1, movement information of the target object is detected in the client of the game application.

In step S2, the movement information of the target object is reported to a server of the game application. Thereby, the server of the game application transmits the movement information to the first member object participating in the current game event.

The server of the game application may transmit the movement information to the first member object, or to both the first member object and the second member object.

The MOBA game application installed on the mobile terminal is further taken as an example for illustration. The movement information of the target object is detected in the client of the game application, and is reported to the server of the game application. After receiving the movement information reported by all clients, the server of the game application collects the movement information and transmits the collected movement information to the clients of the member objects participating in the current game event. After receiving the movement information transmitted by the server, the clients of the game application update maps.

In this embodiment, the movement information of the target object is detected in the client of the game application, and reported to the server of the game application. Thereby, the server of the game application transmits the movement information to the member objects participating in the current game event. The movement information of all the member objects is capable to be displayed for a member object participating in the same game event, improving user experience.

To facilitate description, each of the foregoing method embodiments is described as a series of action combinations. Those skilled in the art can appreciate that the present disclosure is not limited to the described sequence of the operations, and some steps may be performed in another sequence or performed simultaneously according to the present disclosure. In addition, those skilled in the art can appreciate that the described embodiments are exemplary, and a relevant operation or module may not be necessarily required in some embodiments.

According to the foregoing descriptions of embodiments, those skilled in the art may clearly know that the method according to the foregoing embodiments may be implemented via software plus a necessary general hardware platform, or via hardware. In most cases, the former is preferable. Based on such understanding, an essence or a part contributing to the related art may be embodied as a software product according to the technical solutions of the present disclosure. The computer software product is stored in a storage medium (for example, an ROM/RAM, a magnetic disk, or an optical disc), and includes instructions to enable a terminal device (which may be a mobile phone, a computer, a server, a network device, or the like) to perform the method described in embodiments of the present disclosure.

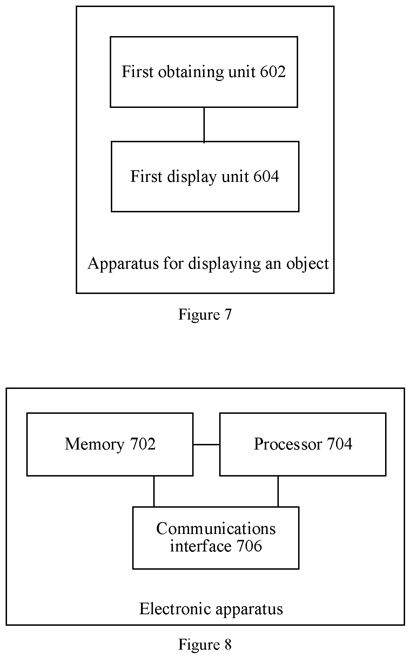

According to an embodiment of the present disclosure, an apparatus for displaying an object is further provided, which is configured to perform the aforementioned method for displaying an object. As shown in Figure 7, the apparatus includes a first obtaining unit 602 and a first display unit 604.

The first obtaining unit 602 is configured to obtain, via a client of a game application, first target movement information of a first member object participating in a current game event. The first member object includes at least one object other than a target object, and the at least one object is in a same camp as the target object. The target object is an object used by the client of the game application in the current game event. The first target movement information includes at least a moving direction of the first member object.

The first display unit 604 is configured to display the first target movement information of the first member object in the client of the game application.

In an embodiment, the game application may include but is not limited to a multiplayer online battle arena game (MOBA game for short) application, which is referred to as an MOBA game application hereinafter to facilitate description. The game application is configured to display a moving location and a moving direction of an ally, thereby obtain a future moving direction of a member object in the same camp, and further determine an advancing strategy of the current ongoing game. An application for displaying a moving location and a moving direction of an object in a game application falls within the protection scope of embodiments of the present disclosure.

In this embodiment, the first target movement information including the moving direction of the first member object is directly displayed via the client of the game application, so as to fast obtain a future moving strategy of the first member object. There is no need to repeat operations such as dragging and view switching for multiple times. Thereby, simplified are operations of displaying the first target movement information of the first member object. Further, addressed is the technical issue that the display operation is excessively complex in the method for displaying an object applied in conventional technology.

Optionally, the first obtaining unit 602 includes a first obtaining module and a second obtaining module.

The first obtaining module is configured to obtain, via the client of the game application, movement information of member objects participating in the current game event. The member objects include the first member object and a second member object. The first member object and the second member object are opposing in the current game event.

The second obtaining module is configured to obtain, from the movement information, first target movement information matching the first member object.

The movement information of the member objects participating in the current game event is obtained. The member objects include, but are not limited to, the first member object and a second member object. The first member object may include, but is not limited to, one or more member objects, and the second member object may include, but is not limited to, one or more member objects. There may be a relationship among member objects that are in the same camp (for example, belongs to the first member objects or the second member object), and the relationship may be but is not limited to cooperation of helping each other. There may be a relationship between member objects that are in different camps, and the relationship may be but is not limited to hostility of opposing each other. A quantity of the member objects may be set according to a scene of the game application, or determined based on game configuration information such as a game mode. A manner of determine the quantity is not limited thereto.

In an embodiment, displaying the first target movement information of the first member object in the client of the game application includes but is not limited to following steps. The first target movement information of the target object is displayed in a first display mode. The first target movement information of another object in the first member objects is displayed in a second display mode. A display label in the first display mode is different from a display label in the second display mode.

For example, it is assumed that a client of an MOBA game application is installed on a current terminal, and a target object A is currently used in the client of the MOBA game application. After obtaining the movement information, the first target movement information of the target object may be in the first display mode, and the first target movement information of an object B that is also a first member object may be displayed in the second display mode. A manner of display is not limited thereto. The display labels of the two display modes are different. In one embodiment, the display labels are embodied as colors, and the first target movement information of different objects may be distinguished from each other by being displayed in different colors. For example, the first target movement information of the target object is displayed in green, and that of the another object in the first member objects is displayed in blue for distinction. In another embodiment, the display labels are embodied as shapes, and different shapes may be used for distinction. For example, the first target movement information of the target object is configured within a pentagon, and that of the another object is configured within a circle. The foregoing is merely examples, and the present disclosure is not limited thereto.

In an embodiment, obtaining the first target movement information matching the first member object from the movement information includes but is not limited to following steps. An object identifier of the first member object is obtained. The first target movement information matching the first member object is identified from the movement information according to the object identifier. The first target movement information may further include a coordinate location of the first member object. In this embodiment, a camp to which objects used by different game accounts belong may be distinguished through the object identifiers. A distinguishing manner is not limited thereto.

In an embodiment, displaying the first target movement information of the first member object in the client of the game application includes, but is not limited to following steps. A map corresponding to the current game event is displayed in the client of the game application. A first avatar identifier of the first member object is displayed on the map according to the coordinate location of the first member object. A location of the first avatar identifier on the map corresponds to a location of the first member object in a game scene corresponding to the map. The first avatar identifier is provided with a first direction marker indicating the moving direction of the first member object.

In this embodiment, an interactive interface in the client of the game application may display the map corresponding to the current game event of the game application. The interactive interface is not limited thereto. The map may be always displayed, with a reduced scale, on the interactive interface in the client of the game application. The map may be invoked and displayed on the interactive interface after a trigger button is tapped. A display manner of the map is not limited thereto. The forgoing display manner is merely an example, and this embodiment is not limited thereto. In this embodiment, the avatar identifiers may be displayed on the map for the member objects. This embodiment is not limited thereto. A display area of the map is limited, and locations of the first member object and the second member object may be marked on the map as their respective corresponding avatar identifiers, according to their respective current coordinate locations. In addition, the avatar identifier may further be provided with a corresponding direction marker, according to a moving direction of the member object. This embodiment is not limited thereto. For example, a directional arrow or the like corresponding to the moving direction of the object may be added on the avatar identifier.

In this embodiment, the interactive interface includes an image of a game scene and an operation interface that are displayed to the user. The interactive interface includes the map and the like. The game scene is an image corresponding to the map, and configured to present corresponding map details, environment, and the like, to a user.

In an embodiment, the first obtaining unit 602 is configured to obtain permission information configured for the target object in the current game event, and obtain second target movement information matching at least one second member object, in a case that the permission information indicates that the target object has first permission. The first obtaining unit 602 is not limited thereto. The second target movement information includes at least a moving direction of the second member object. The second target movement information of the second member object is displayed in the client of the game application.

Here is one application scenario. For every account in a game, the first target movement information of the first member object may be displayed, and the second target movement information may be hidden or partially hidden, so as to ensure fairness of the game. The present disclosure is not limited thereto. In case of being provided with a specific ability, the target object may obtain a specific permission, by which the second target movement information of the second member object can be displayed for a short time, and thereby a change of winning is increased for a camp to which the target object belongs. For example, in case of obtaining the permission information that indicates the target object being provided with the first permission in the current game event, the second target movement information of an opposing second member object is displayed for a preset period for the client using the target object, besides the first target movement information of the first member object.

In an embodiment, the first obtaining unit 602 is configured to perform following steps before the first target movement information of the first member object is obtained via the client of the game application. Movement information of the target object is detected in the client of the game application. The movement information of the target object is reported to a server of the game application. Thereby, the server of the game application transmits the movement information to the first member object participating in the current game event. The first obtaining unit 602 is not limited thereto.

According to embodiments of the present disclosure, the first target movement information including the moving direction of the first member object is directly displayed in the client of the game application, so as to fast obtain a future moving strategy of the first member object. There is no need to repeat operations such as dragging and view switching for multiple times. Thereby, simplified are operations of displaying the first target movement information of the first member object. Further, addressed is the technical issue that the display operation is excessively complex in a method for displaying an object applied in conventional technology.

In an embodiment, the first member object further includes the target object, and the first display unit 604 includes a first display module and a second display module.

The first display module is configured to display the first target movement information of the target object in a first display mode; and

The second display module is configured to display the first target movement information of another object in the first member objects in a second display mode. A display label in the first display mode is different from a display label in the second display mode.

Here is a specific application scenario, and a game application is taken as an example. An object identifier of the first member object is obtained. The object identifier is configured uniquely identify each member object in the game application. The object identifier may include, but is not limited to, a game account ID used in the game application, a game virtual character identifier used in the game application, and other identifiers used in the game application (such as a Play ID). In a case that the object identifier indicates that a current object is the target object, the first display unit 604 may display the first target movement information of the target object in the first display mode. The first display unit 604 is not limited thereto. In the first display mode, an avatar identifier of the target object may be displayed through a first display label, on a map displayed in an interactive interface of the game application. The first display mode is not limited thereto. As an example, a color of the first display label is set to be a first color. In addition, the first display label is further provided with the moving direction of the target object. In a case that the object identifier indicates that a current object is another object other than the target object in the first member objects, the first display unit 604 may display the first target movement information of the another object in the second display mode. The first display unit 604 is not limited thereto. In the second display mode, an avatar identifier of the another object may be displayed via a second display label, on the map displayed in an interactive interface of the game application. As an example, a color of the second display label is set to be a second color. In addition, the second display label is further provided with a moving direction of the another object. Thereby, the target object and another object are distinguished from each other.

In this embodiment, the first target movement information of the target object is displayed in the first display mode, and the first target movement information of the another object among the first member objects is displayed in the second display mode. Thereby, the target object and the another object on the map are distinguished, and moving locations and moving directions of different first member objects are directly and clearly recognized. Each member object in the first member objects is fast distinguished, improving display efficiency and facilitating advancing the game.

In an embodiment, the second obtaining module is further configured to obtain an object identifier of the first member object, and identify the first target movement information matching the first member object from the movement information according to the object identifier.

Here is a specific application scenario, and a game application is taken as an example for illustration. In a client of the game application of a mobile terminal, movement information of all member objects is received after being transmitted by a server of the game application. After the movement information is received, objects belonging to the first member object are distinguished and identified according to the object identifiers of the objects. Accordingly, the first target movement information of the first member object is displayed. The first target movement information includes the moving direction of the first member object and a coordinate location of the first member object.

In this embodiment, the first target movement information matching the first member objects is identified from the movement information according to the object identifier. Hence, members of a group are distinguished, and the first target movement information of the first member object is quickly and directly displayed in an interactive interface of the client of the game application. Display operations are simplified, and display efficiency is improved. Further, a future moving strategy of another member object in the first member objects is determined according to the first target movement information, and a chance of winning against the second member object is increased.

In an embodiment, the first target movement information further includes the coordinate location of the first member object, and the first display unit 604 includes a third display module and a fourth display module.

The third display module, configured to display a map corresponding to the current game event in the client of the game application.

The fourth display module is configured to display a first avatar ID of the first member object on the map, according to the coordinate location of the first member object. A location of the first avatar identifier on the map corresponds to a location of the first member object in a game scene corresponding to the map. The first avatar identifier is provided with a first direction marker indicating the moving direction of the first member object.

Here is a specific application scenario, and an MOBA game application installed on a mobile terminal is taken as an example for illustration. Figure 3 is a schematic diagram of an interactive interface of an MOBA game application. The interactive interface displays a map interface and an interactive interface for the current game event. To facilitate illustration, the map interface and the interactive interface are illustrated for the game application, while an operation panel of the game application is not illustrated. A small window at the upper left corner of the interactive interface is displayed as the map interface. The map interface is configured to display a map corresponding to the current game event, and display an avatar identifier of the first member object on the map according to coordinates at which a target object A is located. The target object A as shown in the map in Figure 3 is displayed as a circular identifier on the map. The circular identifier is provided with a first direction marker indicating a moving direction of the target object A. A location of the avatar identifier of the target object A on the map corresponds to a location of the target object A in a game scene corresponding to the map. In the game scene of the game application, the moving direction of the target object A (indicated by a pointing direction of an arrow to facilitate illustration, and there is no such arrow in the actual application scenario) is consistent with a moving direction of the avatar identifier of the target object A on the map.

In this embodiment, the map corresponding to the current game event is displayed in the client of the game application, and the first avatar identifier of the first member object is displayed on the map. Thereby, an advancing strategy of the member object in the current game event is fast determined by displaying the movement information of the member object on the map. Game experience of a user is improved.

As an optional technical solution, the apparatus further includes a second obtaining unit, a third obtaining unit, and a second display unit.

The second obtaining unit is configured to obtain permission information configured for the target object in the current game event.

The third obtaining unit is configured to obtain second target movement information matching at least one second member object. The second target movement information includes at least a moving direction of the second member object.

The second display unit is configured to display the second target movement information of the second member object in the client of the game application.

Here is a specific application scenario, and an MOBA game application installed on a mobile terminal is taken as an example for illustration. Figure 4 is a schematic diagram of an interactive interface of an MOBA game application. It is assumed that an object A and an object B are the first member objects, and an object C and an object D are the second member objects. The map may directly display avatar identifiers of the object A and the object B that belong to the first member objects, and such avatar identifiers are provided with direction markers. Only avatar identifiers for marking locations are displayed to show the object C and the object D, which belong to the second member objects. A display manner for the object C and the object D is not limited thereto. In the scenario as shown in Figure 4, the object A and the object B belonging to the first member objects are opposing member objects of the object C and the object D belonging to the second member objects. Hence, the moving directions corresponding to the object C and the object D are not displayed with the avatar identifiers on the map.

Further, it is assumed that the permission information configured for the target object A indicates the target object A having the first permission. In such case, the second target movement information matching at least one second member object is obtained from the movement information. For example, movement information of the object C is obtained. In an embodiment, a location of the avatar identifier of the object C and a moving direction of the object C are displayed on the map for the target object A.

The second target movement information of the second member object is displayed in the client of the game application. Identifiers of the object C and the object D in the second member objects are set to be pentagons on the map, as shown in Figure 4. A marker showing the moving direction is provided at one edge of the pentagon. The foregoing is merely an example, and this embodiment is not limited thereto.

In this embodiment, the permission information configured for the target object in the current game event is obtained. In a case that the permission information indicates the target object having a first permission, the second target movement information matching at least one second member object is obtained from the movement information. Thereby, besides the moving direction of the first member object, the moving location and the moving direction of the second member object may further be displayed for the target object within a preset period.

In an embodiment, the second target movement information further includes a coordinate location of the second member object, and the second display unit includes a fifth display module and a sixth display module.

The fifth display module is configured to display a map corresponding to the current game event in the client of the game application.

The sixth display module is configured to display a second avatar identifier of the second member object on the map, according to the coordinate location of the second member object. A location of the second avatar identifier on the map corresponds to a location of the second member object in a game scene corresponding to the map. The second avatar identifier is provided with a second direction marker indicating the moving direction of the second member object. Duration of displaying the second direction marker in the current game event is shorter than a preset threshold.

The MOBA game application installed on the mobile terminal is further taken as an example for illustration. Figure 5 is a schematic diagram of an interactive interface of the MOBA game application. An object A and an object B are the first member objects. Generally, second member objects are located outside a preset vision range of the first member objects, to which the object A and the object B belong. The second member objects include an object C and an object D. Being located outside the preset vision range of the object A and the object B, the object C and the object D are not displayed for the object A and the object B. Users corresponding to the object A and the object B cannot obtain locations and moving directions of the object C and the object D from the map of an application interface. As shown in Figure 6, the second target movement information matching at least one second member object is obtained from the movement information. For example, movement information of the object C and the object D is obtained in a case that the target object A triggers a preset condition (for example, a game character represented by the target object A activates a skill, or the object C and/or the object D moves into the vision range of the target object A). In one embodiment, locations of avatar identifiers and moving directions of the object C and the object D are displayed on the map for the target object A. The duration for displaying the second direction markers of the object C and the object D in the client of the target object A in the current game event is less than the preset threshold. For example, a location and a moving direction of an enemy object may be obtained and displayed in a client of the game application, after an object in the MOBA game application activates a corresponding skill.

In this embodiment, the map corresponding to the current game event is displayed in the client of the game application, and the second avatar identifier of the second member object is displayed on the map. Thereby, besides the moving direction of the first member object, the moving location and the moving direction of the second member object may further be displayed for the target object for a preset period. A chance of winning is increased, while display operations are simplified.

In an embodiment, the apparatus further includes a detection unit and a communications unit.

The detection unit is configured to detect the movement information of the target object in the client of the game application in the client of a game application, before the first target movement information of the first member object participating in the current game event is obtained via the client of the game application.

The communications unit is configured to report the movement information of the target object to a server of the game application. Thereby, the server of the game application transmits the movement information to the first member object participating in the current game event.

The MOBA game application installed on the mobile terminal is further taken as an example for illustration. The movement information of the target object is detected in the client of the game application, and is reported to the server of the game application. After receiving the movement information reported by all clients, the server of the game application collects the movement information and transmits the collected movement information to the clients of the member objects participating in the current game event. After receiving the movement information transmitted by the server, the clients of the game application update maps.

In this embodiment, the movement information of the target object is detected in the client of the game application, and reported to the server of the game application. Thereby, the server of the game application transmits the movement information to the member objects participating in the current game event. The movement information of all the member objects is capable to be displayed for a member object participating in the same game event, improving user experience.

According to an embodiment of the present disclosure, an electronic apparatus is further provided, and the electronic apparatus is configured to implement the aforementioned method for displaying an object. As shown in Figure 8, the electronic apparatus includes a memory 702, a processor 704, and a computer program stored on the memory and executable by the processor. In addition, the electronic apparatus further includes a communications interface 706. The memory 702 is connected to the processor 704 via the communications interface 706. The processor 704 performs following steps S1 and S2 by executing the computer program.

In step S 1, first target movement information of a first member object participating in a current game event is obtained via a client of a game application. The first member object includes at least one object other than a target object, and the at least one object is in a same camp as the target object. The target object is an object used by the client of the game application in the current game event. The first target movement information includes at least a moving direction of the first member object.

In step S2, the first target movement information of the first member object is displayed in the client of the game application.

In this embodiment, specific examples may refer to the examples described in the aforementioned method embodiments and apparatus embodiments. Details are not further described herein.

According to an embodiment of the present disclosure, a storage medium is further provided. In this embodiment, the storage medium stores a program, and the program when executed performs following steps S1 and S2.

In step S 1, first target movement information of a first member object participating in a current game event is obtained via a client of a game application. The first member object includes at least one object other than a target object, and the at least one object is in a same camp as the target object. The target object is an object used by the client of the game application in the current game event. The first target movement information includes at least a moving direction of the first member object.

In step S2, the first target movement information of the first member object is displayed in the client of the game application.

In an embodiment, the storage medium is configured to store program codes, which when executed perform following steps S1 and S2.

In step S1, the first target movement information of the target object is displayed in a first display mode.

In step S2, the first target movement information of another object in the first member objects is displayed in a second display mode.

A display label in the first display mode is different from a display label in the second display mode.

In an embodiment, the storage medium is configured to store program codes, which when executed perform following steps S1 and S2.

In step S1, movement information of member objects participating in the current game event is obtained via the client of the game application. The member objects include a first member object and a second member object. The first member object and the second member object are opposing in the current game event.

In step S2, the first target movement information matching the first member object is obtained from the movement information.

In an embodiment, the first target movement information further includes a coordinate location of the first member object. The storage medium is configured to store program codes, which when executed perform following steps.

A map corresponding to the current game event is displayed in the client of the game application.

A first avatar identifier of the first member object is displayed on the map according to the coordinate location of the first member object. A location of the first avatar identifier on the map corresponds to a location of the first member object in a game scene corresponding to the map. The first avatar identifier is provided with a first direction marker indicating the moving direction of the first member object.

In an embodiment, the storage medium is configured to store program codes, which when executed perform following steps.

Permission information configured for the target object in the current game event is obtained. Second target movement information matching at least one second member object is obtained, in a case that the permission information indicates that the target object has first permission. The second target movement information includes at least a moving direction of the second member object.

The second target movement information of the second member object is displayed in the client of the game application.

In an embodiment, the second target movement information further includes a coordinate location of the second member object. The storage medium is configured to store program codes, which when executed perform following steps S1 and S2.

In step S1, a map corresponding to the current game event is displayed in the client of the game application.

In step S2, a second avatar identifier of the second member object is displayed on the map according to the coordinate location of the second member object. A location of the second avatar identifier on the map corresponds to a location of the second member object in a game scene corresponding to the map. The second avatar identifier is provided with a second direction marker indicating the moving direction of the second member object.

In an embodiment, the storage medium is configured to store program codes, which when executed perform following steps.

Movement information of the target object is detected in the client of the game application.

The movement information of the target object is reported to a server of the game application. Thereby, the server of the game application transmits the movement information to the first member object participating in the current game event.

In these embodiments, the storage medium may include, but is not limited to, various media that can store the program codes. For example, the media may be a USB flash drive, a Read-Only Memory (ROM), a Random Access Memory (RAM), a removable hard disk, a magnetic disk, and an optical disc.

In these embodiments, specific examples may refer to the examples described in the aforementioned method embodiments and apparatus embodiments. Details are not further described herein.

Sequence numbers in the foregoing embodiments of the present disclosure are merely to facilitate illustration, and do not imply preference among the embodiments.

When an integrated unit in the foregoing embodiments is implemented in a form of a software functional unit and sold or used as an independent product, the integrated unit may be stored in the foregoing computer-readable storage medium. Based on such understanding, an essence or a part contributing to the related art may be embodied as a software product according to the technical solutions of the present disclosure. The computer software product is stored in the storage medium, and includes several instructions for enabling one or more computer devices (which may be a personal computer, a server, a network device, or the like) to perform all or some of the steps of the methods described in embodiments of the present disclosure.

In the foregoing embodiments of the present disclosure, the descriptions of the embodiments are focused on different aspects. Some part that is not described in detail in one embodiment may refer to relevant descriptions in other embodiments.

In embodiments of the present disclosure, it is understood that the disclosed client may be implemented in other manners. The apparatus embodiments described above are merely exemplary. For example, the units are merely divided based on logic functions, and other division manners may be applied in practical implementation. For example, multiple units or components may be combined or integrated into another system, or some features may be omitted or not performed. In addition, coupling among the displayed or discussed components, direct coupling, or direct communication connection may be implemented via an interface. Indirect coupling or indirect communication connection of units or modules may be implemented in an electrical form or other forms.

The units described as separate parts may or may not be physically separate, and parts displayed as units may or may not be physical units. Namely, such parts may be located in one position, or may be distributed among multiple network units. Some or all of the units may be selected according to actual requirements, so as to implement the solutions according to these embodiments.

In addition, functional units in the embodiments of the present disclosure may be integrated into one processing unit, or each of the units may be physically separate, or two or more of the units may be integrated as one unit. The integrated unit may be implemented in hardware, or as a software functional unit.

The foregoing descriptions are exemplary implementations of the present disclosure. Those skilled in the art may make improvements and modifications without departing from the principle of the present disclosure. Such improvements and modifications fall within the protection scope of the present disclosure.

## Claims

1. A method for displaying an object, comprising:
obtaining, via a client of a game application, first target movement information of a first member object participating in a current game event; and
displaying, in the client of the game application, the first target movement information of the first member object;
wherein the first member object comprising at least one object other than a target object, and the at least one object is in a same camp as the target object;
wherein the target object is an object used by the client of the game application in the current game event; and
wherein the first target movement information comprises at least a moving direction of the first member object.

2. The method according to claim 1, wherein the first member object further comprises the target object, and
displaying, in the client of the game application, the first target movement information of the first member object comprises:
displaying the first target movement information of the target object in a first display mode; and
displaying the first target movement information of the another object among the first member objects in a second display mode;
wherein a display label in the first display mode is different from a display label in the second display mode.

3. The method according to claim 1, wherein obtaining, via the client of the game application, first target movement information of a first member object participating in a current game event comprises:
obtaining, via the client of the game application, movement information of member objects participating in the current game event; and
obtaining, from the movement information, the first target movement information matching the first member object;
wherein the member objects comprise the first member object and a second member object, and the first member object and the second member object are opposing in the current game event.

4. The method according to claim 3, wherein the obtaining, from the movement information, the first target movement information matching the first member object comprises:
obtaining an object identifier of the first member object; and
identifying, according to the object identifier, the first target movement information matching the first member object from the movement information.

5. The method according to claim 1, wherein the first target movement information further comprises a coordinate location of the first member object; and
displaying, in the client of the game application, the first target movement information of the first member object comprises:
displaying, in the client of the game application, a map corresponding to the current game event; and
displaying, according to the coordinate location of the first member object, a first avatar identifier of the first member object on the map;
wherein a location of the first avatar identifier on the map corresponds to a location of the first member object in a game scene corresponding to the map, and the first avatar identifier is provided with a first direction marker indicating the moving direction of the first member object.

6. The method according to claim 1, further comprising:
obtaining permission information configured for the target object in the current game event;
obtaining, in a case that the permission information indicates that the target object has first permission, second target movement information matching at least one of the second member object, wherein the second target movement information comprises at least a moving direction of the second member object; and
displaying, in the client of the game application, the second target movement information of the second member object.

7. The method according to claim 6, wherein the second target movement information further comprises a coordinate location of the second member object, and
displaying, in the client of the game application, the second target movement information of the second member object comprises:
displaying, in the client of the game application, a map corresponding to the current game event; and
displaying, according to the coordinate location of the second member object, a second avatar identifier of the second member object on the map;
wherein a location of the second avatar identifier on the map corresponds to a location of the second member object in a game scene corresponding to the map, the second avatar identifier is provided with a second direction marker indicating the moving direction of the second member object; and
wherein duration of displaying the second direction marker in the current game event is shorter than a preset threshold.

8. The method according to claim 1, wherein before obtaining, via the client of the game application, the first target movement information of the first member object participating in the current game event, the method further comprises:
detecting, in the client of the game application, movement information of the target object; and
reporting the movement information of the target object to a server of the game application;
wherein the server of the game application transmits, in response to the reporting, the movement information to the first member object participating in the current game event.

9. An apparatus for displaying an object, comprising:
a first obtaining unit, configured to obtain, via a client of a game application, first target movement information of a first member object participating in a current game event; and
a first display unit, configured to display, in the client of the game application, the first target movement information of the first member object;
wherein the first member object comprising at least one object other than a target object, and the at least one object is in a same camp as the target object;
wherein the target object is an object used by the client of the game application in the current game event; and
wherein the first target movement information comprises at least a moving direction of the first member object.

10. The apparatus according to claim 9, wherein the first member object further comprises the target object, and
the first display unit comprises:
a first display module, configured to display the first target movement information of the target object in a first display mode;
a second display module, configured to display the first target movement information of the another object among the first member objects in a second display mode;
wherein a display label in the first display mode is different from a display label in the second display mode.

11. The apparatus according to claim 9, wherein the first obtaining unit comprises:
a first obtaining module, configured to obtain, via the client of the game application, movement information of member objects participating in the current game event; and
a second obtaining module, configured to obtain, from the movement information, the first target movement information matching the first member object;
wherein the member objects comprise the first member object and a second member object, and the first member object and the second member object are opposing in the current game event.

12. The apparatus according to claim 11, wherein the second obtaining module is further configured to:
obtain an object identifier of the first member object; and
identify, according to the object identifier, the first target movement information matching the first member object from the movement information.

13. The apparatus according to claim 9, wherein the first target movement information further comprises a coordinate location of the first member object; and
the first display unit comprises:
a third display module, configured to display, in the client of the game application, a map corresponding to the current game event; and
a fourth display module, configured to display, according to the coordinate location of the first member object, a first avatar identifier of the first member object on the map;
wherein a location of the first avatar identifier on the map corresponds to a location of the first member object in a game scene corresponding to the map, and the first avatar identifier is provided with a first direction marker indicating the moving direction of the first member object.

14. The apparatus according to claim 9, further comprising:
a second obtaining unit, configured to obtain permission information configured for the target object in the current game event;
a third obtaining unit, configured to obtain, in a case that the permission information indicates that the target object has first permission, second target movement information matching at least one of the second member object, wherein the second target movement information comprises at least a moving direction of the second member object; and
a second display unit, configured to display, in the client of the game application, the second target movement information of the second member object.

15. The apparatus according to claim 14, wherein the second target movement information further comprises a coordinate location of the second member object, and
the second display unit comprises:
a fifth display module, configured to display, in the client of the game application, a map corresponding to the current game event; and
a sixth display module, configured to display, according to the coordinate location of the second member object, a second avatar identifier of the second member object on the map;
wherein a location of the second avatar identifier on the map corresponds to a location of the second member object in a game scene corresponding to the map, the second avatar identifier is provided with a second direction marker indicating the moving direction of the second member object; and
wherein duration of displaying the second direction marker in the current game event is shorter than a preset threshold.

16. The apparatus according to claim 9, further comprising:
a detection unit, configured to detect movement information of the target object in the client of the game application, before the movement information of the member object participating in the current game event is obtained via the client of the game application; and
a communications unit, configured to report the movement information of the target object to a server of the game application;
wherein the server of the game application transmits, in response to the movement information of the target object being reported to a server of the game application, the movement information to the first member object participating in the current game event.

17. A storage medium, storing a program, wherein the program when being executed performs the method according to any one of claims 1 to 8.

18. An electronic apparatus for displaying an object, comprising:
a memory,
a processor, and
a computer program, stored on the memory and executable by the processor,
wherein the processor is configured to execute the computer program to perform:
obtaining, via a client of a game application, first target movement information of a first member object participating in a current game event; and
displaying, in the client of the game application, the first target movement information of the first member object;
wherein the first member object comprising at least one object other than a target object, and the at least one object is in a same camp as the target object;
wherein the target object is an object used by the client of the game application in the current game event; and
wherein the first target movement information comprises at least a moving direction of the first member object.

19. The electronic apparatus according to claim 18, wherein the processor is further configured to execute the computer program to perform:
displaying the first target movement information of the target object in a first display mode; and
displaying the first target movement information of the another object among the first member objects in a second display mode;
wherein a display label in the first display mode is different from a display label in the second display mode.

20. The electronic apparatus according to claim 18, wherein the processor is further configured to execute the computer program to perform:
obtaining, via the client of the game application, movement information of member objects participating in the current game event; and
obtaining, from the movement information, the first target movement information matching the first member object;
wherein the member objects comprise the first member object and a second member object, and the first member object and the second member object are opposing in the current game event.

21. The electronic apparatus according to claim 20, wherein the processor is further configured to execute the computer program to perform:
obtaining an object identifier of the first member object; and
identifying, according to the object identifier, the first target movement information matching the first member object from the movement information.

22. The electronic apparatus according to claim 18, wherein the processor is further configured to execute the computer program to perform:
displaying, in the client of the game application, a map corresponding to the current game event; and
displaying, according to the coordinate location of the first member object, a first avatar identifier of the first member object on the map;
wherein a location of the first avatar identifier on the map corresponds to a location of the first member object in a game scene corresponding to the map, and the first avatar identifier is provided with a first direction marker indicating the moving direction of the first member object.

23. The electronic apparatus according to claim 18, wherein the processor is further configured to execute the computer program to perform:
obtaining permission information configured for the target object in the current game event;
obtaining, in a case that the permission information indicates that the target object has first permission, second target movement information matching at least one of the second member object, wherein the second target movement information comprises at least a moving direction of the second member object; and
displaying, in the client of the game application, the second target movement information of the second member object.

24. The electronic apparatus according to claim 23, wherein the processor is further configured to execute the computer program to perform:
displaying, in the client of the game application, a map corresponding to the current game event; and
displaying, according to the coordinate location of the second member object, a second avatar identifier of the second member object on the map;
wherein a location of the second avatar identifier on the map corresponds to a location of the second member object in a game scene corresponding to the map, the second avatar identifier is provided with a second direction marker indicating the moving direction of the second member object; and
wherein duration of displaying the second direction marker in the current game event is shorter than a preset threshold.

25. The electronic apparatus according to claim 18, wherein the processor is further configured to execute the computer program to perform:
detecting, in the client of the game application, movement information of the target object; and
reporting the movement information of the target object to a server of the game application;
wherein the server of the game application transmits, in response to the reporting, the movement information to the first member object participating in the current game event.
